# EUROPÄISCHE PATENTSCHRIFT

(11) **EP 2 463 179 B1**
(45) Veröffentlichungstag und Bekanntmachung des Hinweises auf die Patenterteilung: **04.06.2014**
(21) Anmeldenummer: 11008939.8
(22) Anmeldetag: 10.11.2011
(51) Int. Cl.: B62D 7/14

(54) **Ventilanordnung zur Steuerung eines Zusatz-Lenksystems bei mehrachsigen Fahrzeugen, insbesondere Mobilkranen**
Valve assembly for controlling an additional steering system for multi-axle vehicles, in particular mobile cranes
Agencement des soupapes pour commander un système de guidage supplémentaire dans des véhicules à plusieurs axes, en particulier des grues mobiles

(30) Priorität: 10.12.2010 DE 102010054108
(43) Veröffentlichungstag der Anmeldung: 13.06.2012
(73) Patentinhaber: Hydac System GmbH, 66280 Sulzbach/Saar (DE)
(72) Erfinder: Huth, Heinz-Peter, 66802 Überherrn (DE); Bißbort, Markus, 66497 Contwig (DE); Petak, Christoph, 66280 Sulzbach (DE); Becker, Friedrich, 66265 Heusweiler (DE)
(74) Vertreter: Bartels & Partner

(56) Entgegenhaltungen:
- DE-A1- 10 245 618
- DE-A1-102006 028 957
- DE-U1- 9 005 983

## Beschreibung

Die Erfindung betrifft eine Ventilanordnung zur Steuerung und zum Sperren eines Zusatz-Lenksystems bei mehrachsigen Fahrzeugen mit den Merkmalen im Oberbegriff von Anspruch 1.

Der Einsatz von Zusatz-Lenksystemen mit Zusatz-Lenkachsen, insbesondere bei Nutzkraftfahrzeugen, bietet den Vorteil erhöhter Nutzlast, ohne die Wendigkeit des betreffenden Fahrzeugs einzuschränken. Dabei werden lenkbare Räder an der betreffenden Zusatz-Lenkachse den jeweiligen Lenkwinkeln von Rädern an einer Hauptlenkachse unter Berücksichtigung der Ackermann-Bedingungen mit Hilfe eines entsprechenden hydraulischen Übersetzungsverhältnisses von dem Zusatz-Lenksystem gelenkt. Unter einer Zusatz-Lenkachse wird im engeren Sinne eine Vor- oder Nachlaufachse eines Fahrzeugs verstanden, insbesondere eines Lastkraftwagens oder Autokranes oder einer lenkbaren Achse eines Anhängers oder Aufliegers oder auch einer lenkbaren Achse eines Fahrzeugwagens, beispielsweise eines zwei- oder mehrgliedrigen Gelenk-Omnibusses.

In der DE 37 30 708 A1 wird ein Hilfskraftlenksystem für ein Fahrzeug offenbart, welches einen die Lenkbewegung unterstützenden Hauptarbeitszylinder aufweist, dessen Hydraulikkreis von einem Lenkgetriebe angesteuert wird. Zusätzlich ist ein Zusatz-Lenkzylinder vorgesehen, der von einer Sicherheitseinrichtung steuerbar ist und dessen Hydraulikkreis von dem des Hauptarbeitszylinders getrennt ist. Die Lenkzylinder solcher Zusatz-Lenkachsen werden häufig durch Steuerventilanordnungen oder Lenkventile mit geschlossener Mitte angesteuert, um gelenkte Räder an der Zusatz-Lenkachse zu steuern. Solche Steuerventilanordnungen sind in der Lage, die betreffende gelenkte Zusatz-Lenkachse in einer gewünschten Position zu halten und insbesondere auch Störeinflüsse, z.B. beim Fahren über einen Bordstein, dahingehend zu dämpfen, dass diese nicht zum Aufschwingen des Gesamtsystems Hauptlenkachse, Zusatzlenkachse führen. Um eine Fehlfunktion in dem betreffenden hydraulischen Kreis oder auch hervorgerufen durch fahrdynamische Einflüsse in ihrem Einfluss auf das Zusatz-Lenksystem zu vermeiden, ist es bekannt, eine Sperrventilanordnung beispielsweise durch entsperrbare Rückschlagventile in solchen Zusatz-Lenksystemen vorzusehen, die den betreffenden Lenkzylinder in der Lage sind, stillzusetzen. Die bekannten Ventilanordnungen zur Steuerung eines Zusatz-Lenksystems benötigen keine Rückfallebene, beispielsweise gebildet durch einen Sperrblock oder Redundanzeinrichtungen, die geeignet sind, bei Fehlfunktionen der genannten Komponenten solcher Zusatz-Lenksysteme das Zusatz-Lenksystem sicher zu sperren.

Die DE 102 45 618 A1 zeigt eine aktive Hinterachslenkung für einen Fahrzeugkran auf. Es ist eine Ventilanordnung zur Steuerung und zum Sperren eines Zusatz-Lenksystems beschrieben mit mindestens einem hydraulischen Lenkzylinder mit mindestens einer Sperrventilanordnung zum Sperren von Lenkbewegungen eines ersten Lenkzylinders und mit einer Steuerventilanordnung zum Ansteuern eines zweiten Lenkzylinders zur Darstellung von Lenkbewegungen und zum Halten von aktuellen Lenkpositionen, wobei mittels einer elektronischen Redundanzeinrichtung bei Versagen der Steuerventilanordnung des zweiten Lenkzylinders eine Hinterachse in eine Neutralstellung rückführbar ist.

Die DE 90 05 983 U1 offenbart eine Ventilanordnung zur Steuerung und zum Sperren eines Zusatz-Lenksystems, insbesondere bei Autokran-Lenksystemen, mit mindestens einem hydraulischen Lenkzylinder, mit mindestens einer Sperrventilanordnung zum Sperren von Lenkbewegungen des Lenkzylinders und mit einer Steuerventilanordnung zum Ansteuern des jeweiligen Lenkzylinders zur Darstellung von Lenkbewegungen und zum Halten von aktuellen Lenkpositionen, wobei mittels einer Redundanzeinrichtung bei Versagen der Steuerventilanordnung der Lenkzylinder in seiner aktuellen Lenkposition gehalten ist.

Ausgehend von diesem Stand der Technik liegt der Erfindung die Aufgabe zugrunde, eine Ventilanordnung zur Steuerung und zum Sperren eines Zusatz-Lenksystems anzugeben, deren Betrieb sicher ist.

Die Aufgabe wird mit einer Ventilanordnung mit den Merkmalen des Patentanspruchs 1 in seiner Gesamtheit gelöst.

Gemäß dem Kennzeichen von Anspruch 1 ist vorgesehen, dass die Sperrventilanordnung zumindest ein erstes Senkbremsventil aufweist.

Da die Ventilanordnung einfach baut und insgesamt kostengünstig herstellbar ist, eignet sie sich auch zur Steuerung einer einzigen Zusatz-Lenkachse eines Fahrzeugs. Da bei Nutzkraftfahrzeugen die Lenkkräfte bekanntermaßen im Vergleich zu Personenkraftwagen hoch sind, lässt sich die erfindungsgemäße Ventilanordnung gut an die Ansteuerung mehrerer, vorzugsweise zweier Lenkzyl inder der Zusatz-Lenkachse anpassen.
Dadurch, dass zusätzlich zu der Sperrventilanordnung zum Sperren von Lenkbewegungen des Lenkzylinders der Zusatz-Lenkachse eine Redundanzeinrichtung in der Ventilanordnung vorgesehen ist, die in der Lage ist, bei Versagen der Steuerventilanordnung den von diesem angesteuerten bzw. übersteuerten Lenkzylinder in seiner aktuellen Lenkposition zu halten, wird eine Ventilanordnung vorgeschlagen, die im Vergleich zum Stand der Technik eine zusätzliche Redundanzebene aufweist und dennoch konstruktiv einfach aufbaut und daher im Betrieb sicher ist. Insbesondere bei Zusatz-lenksystemen in vielachsigen Autokranen ist ein Sperren eines Lenkzylinders unabhängig von einem aktuellen Radlenkwinkel der von diesem gelenkten Räder möglich, da die Räder auch in einer eingeschlagenen Lage, von dem übrigen, intakten Fahrwerk mitgeschleppt werden können.

In einem besonders bevorzugten Ausführungsbeispiel der Ventilanordnung ist die Redundanzeinrichtung mit einem 3/2-Wege-Sitzventil mit zumindest zwei Schaltstellungen versehen, wobei in einer ersten Schaltstellung die Druckmittelzufuhr zu der Steuerventilanordnung unterbrochen und eine fluidische Verbindung von der Steuerventilanordnung zu einem Tank geöffnet ist. In einer zweiten Schaltstellung des Wegeventils der Redundanzeinrichtung ist die Druckmittelzufuhr zu der Steuerventilanordnung geöffnet und die fluidische Verbindung von der Steuerventilanordnung zu dem Tank unterbrochen. In der ersten Schaltstellung des Wegeventils ist es ermöglicht, dass das Lenkventil und die Sperrventilanordnung fluidisch mit dem Tank verbindbar sind. In der zweiten Schaltstellung des Wegeventils der Redundanzeinrichtung hingegen ist in Abhängigkeit von der Schaltstellung, in der das Lenkventil blockiert ist, eine Druckmittelzufuhr von einem Pumpenanschluss oder einem Anschluss einer Druckmittelquelle zu einem oder mehreren Lenkzylindern der Zusatz-Lenkachse möglich. Dadurch ist grundsätzlich eine Übersteuerungsmöglichkeit der Lenkzylinder der Zusatz-Lenkachse durch ein Hauptlenksystem gegeben. Bei einer möglichen Fehlfunktion der betreffenden Ventilanordnung kann das Zusatz-Lenksystem mit der erfindungsgemäßen Ventilanordnung in der aktuellen Position sicher blockiert werden.

Es ist vorteilhaft, die Redundanzeinrichtung durch ein elektrisch betätigtes 3/2-Wege-Ventil zu bilden, welches von einer Steuer- und/oder Regelungseinrichtung für die Ventilanordnung in seiner Funktion überwacht werden kann. Die ordnungsgemäße Funktion der Redundanzeinrichtung kann in besonders einfacher Weise durch einen Drucksensor, der vorzugsweise in einer fluidischen Verbindung zwischen dem 3/2-Wege-Ventil und dem Lenkventil den aktuellen Fluiddruck abgreift und mit einer dazugehörigen Steuer- und/oder Regelungseinrichtung vorzugsweise ständig überprüft werden.

In einem besonders bevorzugten Ausführungsbeispiel einer derartigen Fahrzeugachse oder Zusatz-Lenkachse eines Fahrzeugs ist ein erster Lenkzylinder einem ersten gelenkten Rad und ein zweiter Lenkzylinder einem zweiten gelenkten Rad zugeordnet. Es kann vorteilhaft sein, für eine Fahrzeugachse des Fahrzeugs einen Lenkzylinder vorzusehen, wobei der erste Arbeitsraum des Lenkzylinders an das erste Senkbremsventil und der zweite Arbeitsraum des Lenkzylinders an das zweite Senkbremsventil angeschlossen ist. Werden zwei Lenkzylinder je Zusatz-Lenkachse angewandt, so kann es vorteilhaft sein, um eine zusätzliche Sicherheit beim Betrieb der Ventilanordnung herstellen zu können, den kolbenseitigen Arbeitsraum des ersten Lenkzylinders mit dem stangenseitigen Arbeitsraum des zweiten Lenkzylinders und den kolbenseitigen Arbeitsraum des zweiten Lenkzylinders mit dem stangenseitigen Arbeitsraum des ersten Lenkzylinders zu verbinden. Damit ist bewirkt, dass selbst bei Ausfall eines Senkbremsventils beide Lenkzylinder auch mit einem Senkbremsventil im Wesentlichen in ihrer Position ihres Arbeitskolbens gehalten werden können.

Eine weitere konstruktive Maßnahme zur Erhöhung der Betriebssicherheit der erfindungsgemäßen Ventilanordnung ist, dass das erste Senkbremsventil von einem Last- oder Lenkdruck an dem zweiten Senkbremsventil entsperrt wird und dass das zweite Senkbremsventil von einem Lastdruck an dem ersten Senkbremsventil entsperrt wird. Diese konstruktive Maßnahme stellt eine einfach darstellbare Möglichkeit der inneren Überwachungsfunktion der Ventilanordnung ohne zusätzliche Bauelemente dar.

Es ist ferner zweckmäßig, die Steuerventilanordnung in Form eines Lenkventils mit geschlossener Mitte darzustellen, wobei in zumindest einer Druckmittelzufuhrleitung zu dem Lenkventil die Redundanzeinrichtung angebracht ist. Die konstruktive Ausgestaltung der Redundanzeinrichtung ist lediglich beispielhaft in Form eines 3/2-Wege-Sitzventils, angebracht in einer einzigen Druckmittelzufuhrleitung zu dem Lenkventil, ausgeführt. Es versteht sich, dass auch in jede Druckmittelleitung bzw. Druckmittelzufuhrleitung zwischen einer Druckmittelquelle und dem Lenkventil eine Redundanzeinrichtung angebracht sein kann.

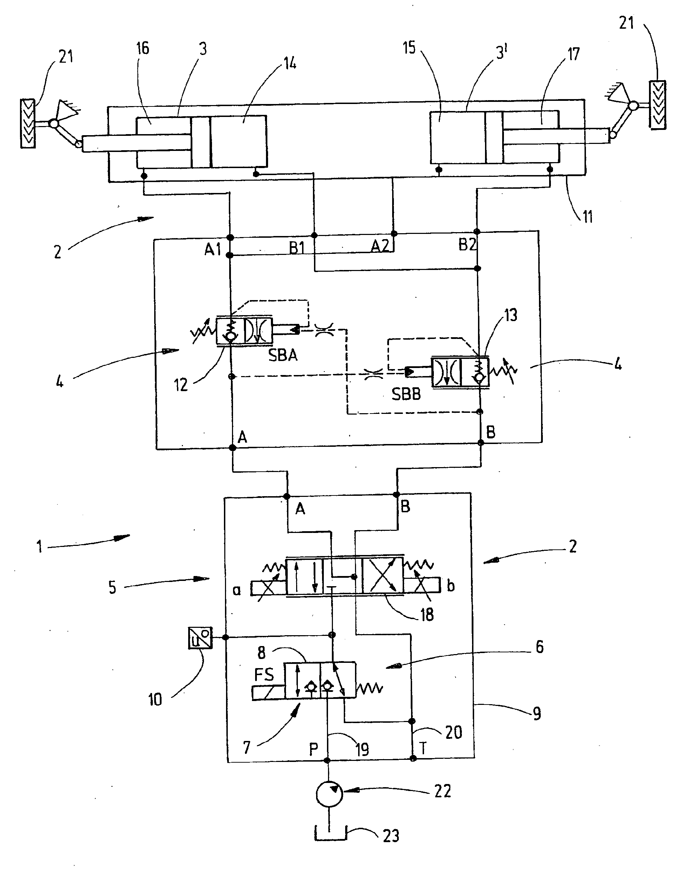

Im Folgenden wird die erfindungsgemäße Ventilanordnung anhand eines Ausführungsbeispiels nach der Zeichnung näher beschrieben. Dabei zeigt die einzige Figur einen schematischen Schaltplan eines Ausführungsbeispiels der Ventilanordnung zur Ansteuerung zweier Lenkzylinder für eine Zusatz-Lenkachse eines Nutzfahrzeugs.

In der Figur ist in einem schematischen Schaltplan eine als Gesamtheit mit 1 bezeichnete Ventilanordnung zur Steuerung eines Zusatz-Lenksystems 2, wie etwa einer Zusatzlenkachse eines Autokranes, gezeigt. Das Zusatz-Lenksystem weist als Aktuatoren einen ersten Lenkzylinder 3 und einen zweiten Lenkzylinder 3' zur jeweiligen Lenkwinkelverstellung eines gelenkten Rades 21, 21' der so gebildeten Zusatz-Lenkachse 11 auf. Jeder Lenkzylinder 3, 3' ist als doppelt wirkender hydraulischer Zylinder ausgebildet. Jeder Lenkzylinder 3, 3' weist einen kolbenseitigen Arbeitsraum 14 bzw. 15 auf. Ferner weist jeder Lenkzylinder einen stangenseitigen Arbeitsraum 16, 17 auf. Die Lenkzylinder 3, 3' werden nach Vor- bzw. Maßgabe der Position eines Ventilelements eines Lenkventils 18 angesteuert.

Das Lenkventil 18 ist in dem gezeigten Ausführungsbeispiel als stetig verstellendes, hydraulisch betätigtes und in einer geschlossenen Mittenposition federzentriertes 4/3-Proportional-Ventil gebildet. Zu dem Lenkventil 18 wird über eine Druckmittelzufuhrleitung 19 und eine Druckmittelleitung 20 Druckmittel von einer Druckmittelquelle 22 zugeführt bzw. in einen Tank 23 abgeleitet. Die genannten Druckmittelleitungen 19, 20 verzweigen sich, wie die Figur zeigt, zum einen zu dem stangenseitigen Arbeitsraum 16 des ersten Lenkzylinders 3 und zu dem kolbenseitigen Arbeitsraum 15 des zweiten Lenkzylinders 3' bzw. zu dem stangenseitigen Arbeitsraum 17 des zweiten Lenkzylinders 3' und zu dem kolbenseitigen Arbeitsraum 14 des ersten Lenkzylinders 3. Zur Vermeidung negativer Einflüsse verursacht durch die Fahrdynamik auf das Zusatzlenksystem des mit der erfindungsgemäßen Ventilanordnung ausgestatteten Fahrzeugs wird eine Redundanzebene durch je eine Sperrventilanordnung 4 in den genannten Druckmittelleitungen gebildet.

In dem gezeigten Ausführungsbeispiel ist die Sperrventilanordnung durch ein erstes Senkbremsventil 12 und durch ein zweites Senkbremsventil 13 gebildet. Die betreffenden Senkbremsventile 12, 13 sind dabei in die Druckmittelleitungen vor deren Verzweigung in die entsprechenden genannten Arbeitsräume eingebracht. Die Senkbremsventile 12, 13 sind dabei von dem Lastdruck in deren jeweiligen anderen Druckmittelleitungen vorgesteuert. Durch eine Steuer- und/oder Regelungseinrichtung 9 sind sowohl die Senkbremsventile 12, 13 als auch das eine Redundanzeinrichtung 6 bildende Sitzventil 7 zwischen der Druckmittelquelle 22 und dem eine Steuerventilanordnung 5 bildenden Lenkventil 18 angesteuert.

In dem gezeigten Ausführungsbeispiel ist die Redundanzeinrichtung durch ein 3/2-Wege-Ventil 8 als Sitzventil 7 ausgebildet. Primär stellt die Redundanzeinrichtung 6 eine konstruktive Maßnahme dar, um bei einer Fehlfunktion der Steuerventilanordnung 5 das Zusatz-Lenksystem 2 von spezifischen Stellfunktionen des Hauptlenksystems zu entkoppeln und über die Sperrventilanordnung 4 zu blockieren. Die Steuer- und/oder Regelungseinrichtung 9 kann ferner einen Drucksensor 10 umfassen, der in dem in der Figur gezeigten Ausführungsbeispiel den aktuellen Fluiddruck in der Druckmittelzuführleitung zwischen der Steuerventilanordnung 5 und der Redundanzeinrichtung 6 abgreift. Durch diese konstruktive Maßnahme ist eine stetige, einfache Überwachung der Funktionstüchtigkeit der gesamten Ventilanordnung 1, insbesondere aber der Redundanzeinrichtung 6 geschaffen.

Prinzipiell ist es möglich, die Sperrventilanordnung 4 anstatt durch die in dem lediglich beispielhaft gezeigten Ausführungsbeispiel angegebenen Senkbremsventile durch jedwede andere Ventilbauart mit einer entsperrbaren Rückschlag-Ventilfunktion und einer Drosselfunktion auszubilden. Es versteht sich ferner, dass zudem andere Bauarten von Lenkventilen 18 als das gezeigte 4/3-Proportionalventil bei der Ventilanordnung 1 anwendbar sind. Dies betrifft auch die konstruktiv andersartige mögliche Ausgestaltung der Redundanzeinrichtung 6 selbst. Ferner können Load-Sensing gesteuerte Flügelzellenpumpen mit kippbarem Außenring eingesetzt werden.

Die erfindungsgemäße Ventilanordnung 1 weist neben einer inneren Überwachungsfunktion somit zwei Redundanzebenen zur Absicherung der Gesamtfunktion der Ventilanordnung bei einem Störfall auf. Insbesondere ist dabei die Außerbetriebsetzung der Lenkfunktion der Lenkzylinder 3, 3' und eine Blockierung der Lenkzylinder 3, 3' und der gelenkten Räder 21, 21' ermöglicht.

## Patentansprüche

1. Ventilanordnung zur Steuerung und zum Sperren eines Zusatz-Lenksystems (2), insbesondere bei Autokran-Lenksystemen, mit mindestens einem hydraulischen Lenkzylinder (3, 3'), mit mindestens einer Sperrventilanordnung (4) zum Sperren von Lenkbewegungen des Lenkzylinders (3, 3') und mit einer Steuerventilanordnung (5) zum Ansteuern des jeweiligen Lenkzylinders (3, 3') zur Darstellung von Lenkbewegungen und zum Halten von aktuellen Lenkpositionen, wobei mittels einer Redundanzeinrichtung (6) bei Versagen der Steuerventilanordnung (5) der Lenkzylinder (3, 3') in seiner aktuellen Lenkposition gehalten ist, **dadurch gekennzeichnet, dass** die Sperrventilanordnung (4) zumindest ein erstes Senkbremsventil (12) aufweist.

2. Ventilanordnung nach Anspruch 1, **dadurch gekennzeichnet, dass** die Redundanzeinrichtung (6) ein Sitzventil (7) mit zumindest zwei Schaltstellungen aufweist, wobei in einer ersten Schaltstellung die Druckmittelzufuhr zu der Steuerventilanordnung (5) unterbrochen und eine fluidische Verbindung von der Steuerventilanordnung (5) zu einem Tank (23) geöffnet ist und in einer zweiten Schaltstellung die Druckmittelzufuhr zu der Steuerventilanordnung (5) geöffnet und die fluidische Verbindung von der Steuerventilanordnung (5) zu dem Tank (23) unterbrochen ist.

3. Ventilanordnung nach einem der vorherigen Ansprüche, **dadurch gekennzeichnet, dass** die Redundanzeinrichtung (6) durch ein elektrisch betätigtes 3/2-Wege-Ventil (8) gebildet ist, welches von einer Steuer- und/oder Regelungseinrichtung (9) für die Ventilanordnung (1) in seiner Funktion überwachbar ist.

4. Ventilanordnung nach einem der vorherigen Ansprüche, **dadurch gekennzeichnet, dass** der Druck an der Redundanzeinrichtung (6) und an der Steuerventilanordnung (5) von einem zu der Steuer- und/oder Regelungseinrichtung (9) gehörigen Drucksensor (10) überwachbar ist.

5. Ventilanordnung nach einem der vorherigen Ansprüche, **dadurch gekennzeichnet, dass** die Ventilanordnung (1) zur Steuerung einer Zusatzlenkachse (11) eines Fahrzeugs oder Anhängers dient.

6. Ventilanordnung nach einem der vorherigen Ansprüche, **dadurch gekennzeichnet, dass** für eine Fahrzeugachse mindestens ein Lenkzylinder (3) vorgesehen ist, und dass der erste Arbeitsraum (16) des Lenkzylinders (3) an das erste Senkbremsventil (12) und der zweite Arbeitsraum (14) des Lenkzylinders (3) an ein zweites Senkbremsventil (13) angeschlossen ist.

7. Ventilanordnung nach einem der vorherigen Ansprüche, **dadurch gekennzeichnet, dass** der kolbenseitige Arbeitsraum (14) des ersten Lenkzylinders (3) mit einem stangenseitigen Arbeitsraum (17) des zweiten Lenkzylinders (3') und ein kolbenseitiger Arbeitsraum (15) des zweiten Lenkzylinders (3') mit dem stangenseitigen Arbeitsraum (16) des ersten Lenkzylinders (3) verbunden ist.

8. Ventilanordnung nach Anspruch 6, **dadurch gekennzeichnet, dass** das erste Senkbremsventil (12) von einem Lastdruck an dem zweiten Senkbremsventil (13) entsperrbar ist und dass das zweite Senkbremsventil (13) von einem Lastdruck an dem ersten Senkbremsventil (12) entsperrbar ist.

9. Ventilanordnung nach einem der vorherigen Ansprüche, **dadurch gekennzeichnet, dass** die Steuerventilanordnung (4) ein Lenkventil (18) mit geschlossener Mitte aufweist und dass in zumindest einer Druckmittel-Zufuhrleitung (19) zu dem Lenkventil (18) die Redundanzeinrichtung (6) eingebracht ist.

10. Ventilanordnung nach einem der vorherigen Ansprüche, **dadurch gekennzeichnet, dass** in jede Druckmittelleitung (19, 20) von dem Lenkventil (18) zu dem jeweiligen Lenkzylinder (3, 3') eine Redundanzeinrichtung (6) eingebracht ist.

## Claims

1. A valve arrangement for controlling and for blocking an additional steering system (2), in particular for mobile crane steering systems, comprising at least one hydraulic steering cylinder (3, 3'), comprising at least one blocking valve arrangement (4) for blocking steering movements of the steering cylinder (3, 3') and comprising a control valve arrangement (5) for controlling the respective steering cylinder (3, 3') in order to display steering movements and for holding current steering positions, the steering cylinder (3, 3') being held in its current steering position by means of a redundancy device (6) if the control valve arrangement (5) fails, **characterised in that** the blocking valve arrangement (4) has at least a first lowering brake valve (12).

2. The valve arrangement according to Claim 1, **characterised in that** the redundancy device (6) has a seat valve (7) with at least two switching positions, in a first switching position the pressurising medium supply to the control valve arrangement (5) being interrupted and a fluidic connection of the control valve arrangement (5) to a tank (23) being opened and in a second switching position the pressurising medium supply to the control valve arrangement (5) being opened and the fluidic connection of the control valve arrangement (5) to the tank (23) being interrupted.

3. The valve arrangement according to any of the preceding claims, **characterised in that** the redundancy device (6) is formed by an electrically operable 3/2-way valve (8) the function of which can be monitored by a control and/or regulation device (9) for the valve arrangement (1).

4. The valve arrangement according to any of the preceding claims, **characterised in that** the pressure at the redundancy device (6) and at the control valve arrangement (5) can be monitored by a pressure sensor (10) belonging to the control and/or regulation device (9).

5. The valve arrangement according to any of the preceding claims, **characterised in that** the valve arrangement (1) serves to control an additional steering axle (11) of a vehicle or trailer.

6. The valve arrangement according to any of the preceding claims, **characterised in that** at least one steering cylinder (3) is provided for a vehicle axle, and that the first working chamber (16) of the steering cylinder (3) is connected at the first lowering brake valve (12) and the second working chamber (14) of the steering cylinder (3) is connected at a second lowering brake valve (13).

7. The valve arrangement according to any of the preceding claims, **characterised in that** the piston-side working chamber (14) of the first steering cylinder (3) is connected to a rod-side working chamber (17) of the second steering cylinder (3') and a piston-side working chamber (15) of the second steering cylinder (3') is connected to the rod-side working chamber (16) of the first steering cylinder (3).

8. The valve arrangement according to Claim 6, **characterised in that** the first lowering brake valve (12) can be released by a load pressure at the second lowering brake valve (13) and that the second lowering brake valve (13) can be released by a load pressure at the first lowering brake valve (12).

9. The valve arrangement according to any of the preceding claims, **characterised in that** the control valve arrangement (4) has a steering valve (18) with a closed centre and that the redundancy device (6) is inserted into at least one pressurising medium supply line (19) to the steering valve (18).

10. The valve arrangement according to any of the preceding claims, **characterised in that** a redundancy device (6) is inserted into each pressurising medium line (19, 20) from the steering valve (18) to the respective steering cylinder (3, 3').

## Revendications

1. Agencement de vanne pour la commande et pour le blocage d'un système (2) de direction supplémentaire, notamment dans des systèmes de direction de camions grues comprenant au moins un cylindre (3, 3') de direction hydraulique, au moins un agencement (4) de vanne de blocage pour le blocage de mouvements de direction du cylindre (3, 3') de direction et un agencement (5) de vanne de commande pour la commande du cylindre (3, 3') de direction respectif, pour l'obtention de mouvements de direction et pour le maintien de positions présentes de direction, dans lequel, au moyen d'un dispositif (6) de redondance, le cylindre (3, 3') de direction est, lorsque l'agencement (5) de vanne de commande est en panne, maintenu dans sa position de direction présente, **caractérisé en ce que** l'agencement (4) de vanne de blocage a au moins une première vanne (12) de frein de descente.

2. Agencement de vanne suivant la revendication 1, **caractérisé en ce que** le dispositif (6) de redondance a une vanne (7) à siège ayant au moins deux positions de commutation, dans lequel, dans une première position de commutation, l'envoi de fluide sous pression à l'agencement (5) de vanne de commande est interrompu et une liaison fluidique allant de l'agencement (5) de vanne de commande à une cuve (23) est ouverte et, dans une deuxième position de commutation, l'envoi de fluide sous pression à l'agencement (5) de vanne de commande est permis et la liaison fluidique allant de l'agencement (5) de vanne de commande à la cuve (23) est interrompue.

3. Agencement suivant l'une des revendications précédentes, **caractérisé en ce que** le dispositif (6) de redondance est formé par un distributeur (8) à 3/2 voies à actionnement électrique, dont le fonctionnement peut être contrôlé par un dispositif (9) de commande et/ou de régulation de l'agencement (1) de vanne.

4. Agencement suivant l'une des revendications précédentes, **caractérisé en ce que** la pression au dispositif (6) de redondance et à l'agencement (5) de vanne de commande peut être contrôlée par un capteur (10) de pression appartenant au dispositif (9) de commande et/ou de régulation.

5. Agencement suivant l'une des revendications précédentes, **caractérisé en ce que** l'agencement (1) de vanne sert à commander un essieu (3) directeur supplémentaire d'un véhicule ou d'une remorque.

6. Agencement suivant l'une des revendications précédentes, **caractérisé en ce qu'**il est prévu pour un essieu de véhicule au moins un cylindre (3) de direction et **en ce que** la première chambre (16) de travail du cylindre (3) de direction est raccordée à la première vanne (12) de frein de descente et la deuxième chambre (14) de travail du cylindre (3) de direction à une deuxième vanne (13) de frein de descente.

7. Agencement suivant l'une des revendications précédentes, **caractérisé en ce que** la chambre (14) de travail, côté piston du premier cylindre (3) de direction, est reliée à une chambre (17) de travail côté tige du deuxième cylindre (3') de direction et une chambre (15) de travail, côté piston du deuxième cylindre (3') de direction, à la chambre (16) de travail côté tige du premier cylindre (3) de direction.

8. Agencement suivant la revendication 6, **caractérisé en ce que** la première vanne (12) de frein de descente peut être débloquée par une pression de charge sur la deuxième vanne (13) de frein de descente et **en ce que** la deuxième vanne (13) de frein de descente peut être débloquée par une pression de charge sur la première vanne (12) de frein de descente.

9. Agencement suivant l'une des revendications précédentes, **caractérisé en ce que** l'agencement (4) de vanne de commande a une vanne (18) de direction à milieu fermé et **en ce que** le dispositif (6) de redondance est mis dans au moins un conduit (19) d'envoi de fluide sous pression à la vanne (18) de direction.

10. Agencement suivant l'une des revendications précédentes, **caractérisé en ce qu'**un dispositif (6) de redondance est mis dans chaque conduit (19, 20) pour du fluide sous pression allant de la vanne (18) de direction au cylindre 3, 3') de direction respectif.
